(19) Europäisches Patentamt
European Patent Office
Office européen des brevets

(11) **EP 2 765 222 A1**

(12) **EUROPÄISCHE PATENTANMELDUNG**

(43) Veröffentlichungstag:
**13.08.2014   Patentblatt 2014/33**

(51) Int Cl.:
***C25B 11/04*** *(2006.01)*     ***H01M 4/04*** *(2006.01)*
***C25B 1/34*** *(2006.01)*

(21) Anmeldenummer: **14153899.1**

(22) Anmeldetag: **05.02.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.02.2013   DE 102013202143**

(71) Anmelder:
 • **Bayer MaterialScience AG**
  **51368 Leverkusen (DE)**
 • **Nano-X GmbH**
  **66130 Saarbrücken (DE)**

(72) Erfinder:
 • **Kintrup, Jürgen**
  **51373 Leverkusen (DE)**

 • **Bulan, Andreas**
  **40764 Langenfeld (DE)**
 • **Hammarberg, Elin**
  **66119 Saarbrücken (DE)**
 • **Sepeuer, Stefan**
  **66787 Wadgassen (DE)**
 • **Frenzer, Gerald**
  **66130 Saarbrücken-Fechingen (DE)**
 • **Gross, Frank**
  **66663 Merzig (DE)**

(74) Vertreter: **BIP Patents**
  **c/o Bayer Intellectual Property GmbH**
  **Creative Campus Monheim**
  **Alfred-Nobel-Straße 10**
  **40789 Monheim (DE)**

(54) **Katalysatorbeschichtung und Verfahren zu ihrer Herstellung**

(57)    Es wird ein Verfahren zur nasschemischen Herstellung einer Katalysatorbeschichtung auf einem elektrisch leitfähigen Träger für Elektroden zur Chloralkali- oder Salzsäureelektrolyse mit elektrokatalytisch aktiven Komponenten auf Basis von Edelmetalloxiden, insbesondere Rutheniumoxid und/oder Iridiumoxid und gegebenenfalls zusätzlich Ventilmetalloxid, insbesondere Titanoxid beschrieben, bei dem zur Herstellung der Katalysatorbeschichtung

a) eine Beschichtungslösung oder -dispersion mindestens enthaltend eine Vorläuferverbindung eines Edelmetalls und/oder ein Metalloxid eines Edelmetalls, insbesondere von Ruthenium und/oder Iridium und gegebenenfalls zusätzlich eine Zinn- und/oder Ventilmetallverbindung, und ein Lösungsmittel oder Dispersionsmittel hergestellt wird, wobei der Beschichtungslösung oder -dispersion eine oder mehrere Säuren zugesetzt werden, wobei das molare Verhältnis der in der Beschichtungslösung oder -dispersion befindlichen Summe der Stoffmengen an Säure (in mol) zu der Summe der Stoffmengen der in der Beschichtungslösung oder -dispersion enthaltenen Metalle aus den Metalle enthaltenden Komponenten (d.h. der Summe der in der Beschichtungslösung oder - dispersion enthaltenen Metalle in mol) mindestens 2:1 beträgt,

b) die Beschichtungslösung oder -dispersion auf den leitfähigen Träger aufgebracht wird,

c) die aufgebrachte Schicht von Lösungsmittel oder Dispersionsmittel weitgehend durch Trocknen befreit wird und

d) die erhaltene getrocknete Schicht anschließend einer thermischen Behandlung bei einer Temperatur von mindestens 300°C, und gegebenenfalls in Gegenwart Sauerstoff enthaltender Gase, unter Bildung der Katalysatorbeschichtung unterzogen wird.

EP 2 765 222 A1

## Beschreibung

Die Erfindung betrifft eine verbesserte Katalysatorbeschichtung mit elektrokatalytisch aktiven Komponenten auf Basis von Rutheniumoxid und Titanoxid, insbesondere für den Einsatz in der Chloralkali- oder Salzsäure-Elektrolyse zur Herstellung von Chlor. Die Erfindung betrifft ferner ein Herstellungsverfahren für die Katalysatorbeschichtung und eine neue Elektrode.

Die vorliegende Erfindung beschreibt im speziellen ein Verfahren zur nasschemischen Abscheidung von Mischoxid-Schichten aus Rutheniumoxid und Titanoxid auf einem metallischen Träger sowie deren Verwendung als Elektrokatalysatoren in der Chlorherstellung durch Elektrolyse.

Die Erfindung geht von an sich bekannten Elektroden und Elektrodenbeschichtungen aus, die üblicherweise auf einen elektrisch leitenden Träger beschichtet sind und katalytisch aktive Komponenten enthalten, welche insbesondere elektrokatalytisch aktive Komponenten auf Basis von Rutheniumoxid und Titanoxid umfassen.

Chlor wird technisch üblicherweise durch Elektrolyse von Natriumchlorid oder Salzsäure oder durch Gasphasenoxidation von Chlorwasserstoff hergestellt (Schmittinger, Chorine, Wiley-VCH 1999, Seite 19-27). Werden Elektrolyseverfahren eingesetzt, so wird das Chlor an der Anode erzeugt. Als Anodenwerkstoff wird dabei meist Titan als Elektrodenwerkstoff eingesetzt, auf dessen Oberfläche sich ein elektrochemisch aktiver Katalysator befindet. Die Schicht auf der Oberfläche, die den Katalysator enthält, wird üblicherweise auch als Coating, im folgenden auch Beschichtung genannt, bezeichnet. Aufgabe des Katalysators sind die Herabsetzung der Überspannung und die Vermeidung der Sauerstoffentwicklung an der Anode (Winnacker-Küchler, Chemische Technik, Prozesse und Produkte, 5. Auflage, Wiley-VCH 2005, Seite 469-470).

Bei der Herstellung von Chlor durch Elektrolyse von Salzsäure werden Graphitanoden eingesetzt (Winnacker-Küchler, Chemische Technik, Prozesse und Produkte, 5. Auflage, Wiley-VCH 2005, Seite 514). Bei der Salzsäure-Elektrolyse, bei der beispielsweise auf der Kathodenseite eine Gasdiffusionselektrode eingesetzt wird, können Titan-Anoden eingesetzt werden, die edelmetallbasierte Katalysatoren im Coating besitzen (Winnacker-Küchler, Chemische Technik, Prozesse und Produkte, 5. Auflage, Wiley-VCH 2005, Seite 515).

Elektroden für Elektrolyse-Prozesse basieren üblicherweise auf einem Metall, das zu den sogenannten Ventil-Metallen gehört. Unter Ventil-Metallen werden z.B. die Metalle Titan, Zirkon, Wolfram, Tantal und Niob verstanden. Diese wirken aufgrund von Oxidschichten auf der Metalloberfläche als Diodenmaterial für elektrischen Strom.

Auf der Oberfläche der Ventilmetalle wird für die Anwendung in der Elektrolyse üblicherweise ein elektrokatalytisch aktiver Katalysator bestehend aus einem Edelmetall und/oder dessen Metalloxid aufgebracht, wobei auch gegebenenfalls zusätzlich Oxide des Ventilmetalls im Metalloxid enthalten sein können (WO 200602843 (ELTECH), BECK, Electrochimica Acta, Vol. 34, No. 6. Seiten 811-822, 1989)). Das Oxid bildende Edelmetall gehört üblicherweise zu den Platinmetallen, wie z.B. Iridium, Ruthenium, Rhodium, Palladium, Platin oder Mischungen daraus. Üblicherweise werden solche Elektroden als DSA-Elektroden bezeichnet, wobei DSA für "dimensionally stable anode" steht.

Nachteile dieser bekannten Elektroden bei Einsatz in halogenid-haltigen Elektrolyten, sind der noch hohe Überspannungsanteil für die Chlor-Abscheidung, die Neigung der Elektroden trotzdem Sauerstoff zu entwickeln, die hohe Elektrolysespannung und der hohe Bedarf an kostenträchtigem Edelmetall zur Herstellung der Beschichtung. All diese Faktoren haben eine negative Auswirkung auf die Wirtschaftlichkeit des bekannten Elektrolyseverfahrens unter Verwendung solcher Elektroden.

Von den Beschichtungen aus dem Stand der Technik ist ferner bekannt (DE 602005002661 T2), dass unter Elektrolysebedingungen mit der Zeit die Edelmetalle aus der Beschichtung eluiert werden, es liegt demnach keine ausreichende dauernde Korrosionsbeständigkeit vor. Die Notwendigkeit der Korrosionsbeständigkeit wird dadurch deutlich, dass der Verlust der edelmetallhaltigen Beschichtung dazu führt, dass das Elektrodenmetall, üblicherweise das Ventilmetall, direkt mit dem Elektrolyten in Kontakt kommt und ein Oxid auf seiner Oberfläche bildet, das nicht elektrisch leitend ist. Für den laufenden Elektrolyseprozess bedeutet dies, dass an dieser Oberfläche keine elektrochemischen Prozesse mehr stattfinden, was einen Totalausfall der Elektrolysezelle mit den entsprechenden negativen wirtschaftlichen Folgen nach sich ziehen kann.

Weiterhin wird bei Einsatz eines Elektrolyseurs mit edelmetallhaltigen DSA-Elektroden in chloridhaltigen Lösungen zur Herstellung von Chlor beobachtet, dass die Nebenreaktion der Sauerstoffbildung nicht vollständig unterdrückt werden kann, wodurch Sauerstoff im Produktgas Chlor gefunden wird. Der Sauerstoffanteil bedingt einen erhöhten Reinigungsaufwand für das Chlorgas und hat dadurch ebenfalls negative Auswirkungen auf die Wirtschaftlichkeit der Elektrolyse. Die vermehrte Bildung von Sauerstoff wird besonders dann deutlich sichtbar, wenn die Chlorid-Konzentration im Elektrolyten sinkt, im Falle der Elektrolyse von Kochsalzlösungen besonders bei einer Konzentration unter 200 g/l NaCl, und wenn die Stromdichte erhöht wird, besonders oberhalb einer Stromdichte von 5 kA/m$^2$.

Weiterhin beeinträchtigt der alleinige Einsatz von Edelmetallen als katalytisches Elektrodenmaterial durch deren hohen Preis und deren schwindende Verfügbarkeit am Weltmarkt ebenfalls die Wirtschaftlichkeit bekannter Elektroden.

Mischoxid-Schichten aus Titanoxid und Rutheniumoxid, die auf Titan geträgert werden, sind seit langem als stabile Elektrokatalysatoren für die Chloralkalielektrolyse bekannt.

Konventionell werden diese über eine thermische Zersetzung von wässrigen oder organischen Ruthenium- und Titan-Salzlösungen hergestellt, welche durch Eintauchen, Aufpinseln oder Sprühen auf ein Titansubstrat aufgetragen werden. Nach jedem Auftragungsschritt erfolgt eine Kalzinierung. In der Regel werden mehrere Auftragungs-/Kalzinierungsschritte benötigt, um die erforderliche Katalysatorbeladung auf der Elektrode zu erreichen. Nachteilig ist, dass die so beschichteten Elektroden immer noch eine signifikante Überspannung für die elektrochemische Chlorerzeugung aufweisen.

Ein weiteres Verfahren zur Herstellung von Mischoxid-Schichten aus Titanoxid und Rutheniumoxid auf einem Titanträger ist die Sol-Gel-Synthese. Hierbei wird in der Regel eine organische Vorläuferlösung auf das Titan aufgetragen. Das Verfahren benötigt analog zum thermischen Zersetzungsverfahren mehrere aufwändige Kalzinierungsschritte. Ebenfalls nachteilig ist bei der Sol-Gel-Synthese der Einsatz von sehr teuren organischen Vorläuferverbindungen.

Eine gute Mischoxidbildung von Titanoxid und Rutheniumoxid ist bekanntermaßen ausschlaggebend für die anodische Stabilität in der Chlorelektrolyse. Reines Rutheniumoxid ist gegenüber anodischer Sauerstoffentwicklung, die mit der Chlorentwicklung einhergeht, korrosionsempfindlich. Erst die Mischoxidbildung von Rutheniumoxid mit Titanoxid sorgt für eine ausreichende Stabilität. Der Effekt der Mischoxidbildung auf die Elektrodenstabilität wird von V. M. Jovanovic, A. Dekanski, P. Despotov, B. Z. Nikolic und R. T. Atanasoski in Journal of Electroanalytical Chemistry 1992, 339, Seiten 147-165 beschrieben.

Die Aufgabe der vorliegenden Erfindung besteht darin, eine verbesserte Katalysatorbeschichtung mit elektrokatalytisch aktiven Komponenten auf Basis von Rutheniumoxid und Titanoxid und ein Verfahren zu ihrer Herstellung bereitzustellen, die die vorstehenden Nachteile der bislang bekannten Beschichtungen überwindet und bei Anwendung auf einer Elektrode eine niedrigere Überspannung bei der Chlorentwicklung beispielsweise in der Chloralkali-Elektrolyse oder Salzsäure-Elektrolyse ermöglicht. Weiterhin soll die Katalysatorbeschichtung fest auf dem Basismetall haften und chemisch sowie elektrochemisch nicht angegriffen werden. Mit der Katalysatorbeschichtung soll eine niedrige Elektrolysespannung auch bei niedriger Chlorid-Konzentration erreichbar sein.

Spezielle Aufgabe der Erfindung ist es, ein nasschemisches Präparationsverfahren für Mischoxid-Schichten zu entwickeln, das gegenüber den bereits bekannten Verfahren verbesserte Eigenschaften zeigt.

Die zuvor beschriebene Aufgabe wird erfindungsgemäß dadurch gelöst, dass eine ausgewählte Katalysatorbeschichtung auf Basis von Edelmetalloxiden, insbesondere Rutheniumoxid und/oder Iridiumoxid und Ventilmetalloxiden, insbesondere Titanoxid eingesetzt wird, in der bei der Herstellung einer Beschichtungslösung oder Beschichtungssuspension ein Lösungsmittel oder Dispersionsmittel mit einem signifikanten Überschuss an Säure zur katalytischen Komponente eingesetzt wird.

Gegenstand der Erfindung ist ein Verfahren zur nasschemischen Herstellung einer Katalysatorbeschichtung auf einem elektrisch leitfähigen Träger für Elektroden zur Chloralkali- oder Salzsäureelektrolyse mit elektrokatalytisch aktiven Komponenten auf Basis wenigstens eines Edelmetalloxids und/oder Edelmetalls der Edelmetalle der Nebengruppe: VIIIa des periodischen Systems der Elemente, insbesondere einem Edelmetall ausgewählt aus der Reihe: Ru, Rh, Pd, Os, Ir und Pt, insbesondere Rutheniumoxid und/oder Iridiumoxid und gegebenenfalls zusätzlich wenigstens ein Ventilmetalloxid und/oder Ventilmetall, insbesondere mit einem Ventilmetall ausgewählt aus der Reihe Ti, Zr, W, Ta, Nb oder deren Oxide, dadurch gekennzeichnet, dass zur Herstellung der Katalysatorbeschichtung

a) eine Beschichtungslösung oder -dispersion mindestens enthaltend eine Vorläuferverbindung eines Edelmetalls und/oder ein Metalloxid eines Edelmetalls, insbesondere eine Vorläuferverbindung von Ruthenium und/oder Iridium und gegebenenfalls zusätzlich eine Vorläuferverbindung eines Ventilmetalls und/oder ein Metalloxid eines Ventilmetalls und/oder eine Zinnverbindung, bevorzugt eine Titanverbindung, und ein Lösungsmittel oder Dispersionsmittel hergestellt wird, wobei der Beschichtungslösung oder -dispersion eine oder mehrere Säuren zugesetzt werden, wobei das molare Verhältnis der in der Beschichtungslösung oder -dispersion befindlichen Summe der Stoffmengen an Säure (in mol) zu der Summe der Stoffmengen der in der Beschichtungslösung oder -dispersion enthaltenen Metalle aus den Metalle enthaltenden Komponenten (d.h. der Summe der in der Beschichtungslösung oder -dispersion enthaltenen Metalle in mol) mindestens 2:1, bevorzugt mindestens 3:1, besonders bevorzugt mindestens 4:1 beträgt,

b) die Beschichtungslösung oder -dispersion auf den leitfähigen Träger aufgebracht wird,

c) die aufgebrachte Schicht von Lösungsmittel oder Dispersionsmittel weitgehend durch Trocknen befreit wird und

d) die erhaltene getrocknete Schicht anschließend einer thermischen Behandlung bei einer Temperatur von mindestens 300°C, bevorzugt mindestens 400°C, und gegebenenfalls in Gegenwart Sauerstoff enthaltender Gase, unter Bildung der Katalysatorbeschichtung unterzogen wird.

Ein signifikanter Überschuss an Säure zur katalytischen Komponente in der Beschichtungslösung/dispersion liegt insbesondere dann vor, wenn das molare Verhältnis der in der Lösung/Dispersion befindlichen Summe der Stoffmengen Säure (in mol) zu der Summe der Stoffmengen der in der Beschichtungslösung oder -dispersion enthaltenen Metalle aus den Metalle enthaltenden Komponenten (Summe der enthaltenen Metalle in mol) mindestens 2:1, bevorzugt mindestens 3:1, besonders bevorzugt mindestens 4:1 ist. Die Säure kann entweder eine oder mehrere organische oder eine oder mehrere anorganische Säuren sein, oder eine Kombination von einer oder mehreren organischen und einer oder mehreren anorganischen Säuren sein. Bevorzugt ist mindestens eine Säure eine organische Säure. Eine Säure im Sinne der Erfindung liegt insbesondere dann vor, wenn ihr $pK_s$-Wert in wässriger Lösung höchstens 12, bevorzugt höchstens 8 und besonders bevorzugt höchstens 5 beträgt.

Zwischen einer Säure HA und ihrer Base A- liegt in wässriger Lösung folgende Gleichgewichtsreaktion vor: $HA + H_2O = H_3O^+ + A^-$

Der $pK_s$-Wert für eine Säure HA bestimmt sich dann zu

$$pK_s = - \lg[c(H_3O^+) \times c(A^-) / c(HA) / (mol/l)]$$

wobei c die Konzentration der jeweiligen Spezies in mol/l bezeichnet.

Überraschend wurde gefunden, dass bei Einsatz einer Beschichtungslösung oder -dispersion mit signifikantem Säureüberschuss bezogen auf die in der Beschichtungslösung enthaltenen metallischen Komponenten die in der Elektrolyse benötigte Zellspannung weiter abgesenkt werden kann.

Die nach dem erfindungsgemäßen Verfahren präparierten Katalysatorbeschichtungen zeichnen sich dadurch aus, dass sie gegenüber den aus bekannten Verfahren erhältlichen eine besondere Oberflächenmorphologie aufweisen.

Diese besondere Oberflächenmorphologie erhöht offenbar die aktive Oberfläche, die zur Elektrokatalyse genutzt werden kann. Somit wird die katalytische Aktivität verbessert und der Edelmetallgehalt kann gegenüber bekannten Katalysatorbeschichtungen reduziert werden.

Eine besondere Ausführungsform des neuen Verfahrens ist dadurch gekennzeichnet, dass die Beschichtungslösung oder -dispersion gemäß Schritt a) zusätzlich eine Vorläuferverbindung und/oder ein Metall und/oder ein Metalloxid eines oder mehrerer Dotierungselemente aus der Reihe: Aluminium, Antimon, Blei, Eisen, Germanium, Indium, Mangan, Molybdän, Niob, Tantal, Titan, Tellur, Vanadium, Zink, Zinn, und Zirkon, enthält.

Eine besondere Ausführungsform des neuen Verfahrens besteht darin, auf einer Elektroden-Struktur, die aus einem Ventilmetall, insbesondere einem Metall der Gruppe Titan, Zirkon, Wolfram, Tantal oder Niob besteht, die Katalysatoren wie folgt aufzubringen: Hierfür wird die Elektroden-Struktur mechanisch vorgereinigt, insbesondere gesandstrahlt und kann gegebenenfalls anschließend zur weiteren Entfernung von Oxiden auf der Oberfläche mit einer Säure z.B. einer Mineralsäure wie Salzsäure oder Oxalsäure geätzt werden.

Zur Beschichtung der Oberfläche kann beispielsweise eine Beschichtungslösung oder -dispersion eingesetzt werden, die aus einer Edelmetallverbindung, wenigstens einem Lösungsmittel aus der Reihe: Wasser, $C_1$-$C_6$-Alkohol, bevorzugt Butanol oder Isopropanol, oder einer Mischung aus $C_1$-$C_6$-Alkohol und Wasser, und einer Säure und gegebenenfalls einer Ventil-Metall-Verbindung besteht. Bevorzugte Lösungsmittel oder Dispersionsmittel sind daher eines oder mehrere aus der Reihe: Wasser und $C_1$-$C_6$-Alkohol, besonders bevorzugt Butanol oder Isopropanol.

Als Säure in der Beschichtungslösung können eine oder mehrere organische oder anorganische Säuren oder eine Kombination von organischen und anorganischen Säuren eingesetzt werden. Bevorzugt ist ein besonderes Verfahren bei dem als Säure in der Beschichtungslösung eine Kombination von organischer und anorganischer Säure eingesetzt wird, wobei das molare Verhältnis der in der Beschichtungslösung oder -dispersion befindlichen Stoffmenge an organischer Säure (in mol) zu der Stoffmenge an mineralischer Säure 20:80 bis 100:0, bevorzugt 50:50 bis 100:0, besonders bevorzugt 80:20 bis 100:0 beträgt.

Als organische Säuren werden bevorzugt wasserlösliche Säuren eingesetzt, beispielsweise Alkansäuren, Alkandisäuren, Mono-, di- und trihalogenalkansäuren, bevorzugt wird mindestens eine kurzkettige Alkansäure wie Ameisensäure, Essigsäure oder Propionsäure eingesetzt oder eine kurzkettige Mono-, di- oder trihalogenalkansäure wie Chloressigsäure, Dichloressigsäure, Trichloressigsäure, Fluoressigsäure, Difluoressigsäure oder Trifluoressigsäure oder Toluolsulfonsäure. Als anorganische Säuren können Mineralsäuren wie beispielsweise Halogenwasserstoffsäuren, bevorzugt Salzsäure, Schwefelsäure, schweflige Säure, Phosphorsäure, phosphorige Säure, Salpetersäure und/oder salpetrige Säure oder auch Phosphonsäuren, Sulfonsäuren, blockierte Sulfonsäuren, blockierte Schwefel- und Phosphorsäuren eingesetzt werden. Besonders bevorzugt werden Mischungen einer Mineralsäure und einer organischen Säure eingesetzt.

In einem besonders bevorzugten Verfahren wird als Säure in der Beschichtungslösung in a) Salzsäure und/oder eine $C_1$-$C_4$-Carbonsäure, bevorzugt mindestens eine Säure aus der Reihe: Salzsäure, Ameisensäure, Essigsäure oder Propionsäure eingesetzt. Ganz besonders bevorzugt wird eine Mischung aus Essigsäure und Salzsäure eingesetzt.

Die Beschichtungslösung kann zusätzlich oder auch anstelle einer oder mehrerer der vorgenannten Metallverbindungen weitere Feststoffe enthalten. Bevorzugte Feststoffe sind Modifikationen des Kohlenstoffs oder Nicht-Edelmetall-Oxide oder deren Mischungen.

Die Dispersion weist dann bevorzugt bis 20 Gew.-%, besonders bevorzugt bis 10 Gew.-%, weiteren Feststoff, bezogen auf das Gewicht der Suspension, auf.

Als Edelmetall-Vorläuferverbindungen werden im neuen Verfahren, insbesondere im Lösungsmittel lösliche, Fluoride, Chloride, Iodide, Bromide, Nitrate, Phosphate, Sulfate, Acetate, Acetylacetonate oder Alkoxide der Elemente: Ru, Rh, Pd, Os, Ir und Pt, bevorzugt ein Edelmetall-Chlorid, besonders bevorzugt ein Rutheniumchlorid und/oder Iridiumchlorid eingesetzt. Gegebenenfalls können zusätzlich Ventilmetall-Vorläuferverbindungen eingesetzt werden, bevorzugt im Lösungsmittel lösliche Fluoride, Chloride, Iodide, Bromide, Nitrate, Phosphate, Sulfate, Acetate, Acetylacetonate oder Alkoxide von den Elementen Titan, Zirkon, Wolfram, Tantal und Niob, besonders bevorzugt wenigstens ein Titanalkoxid ausgewählt aus der Reihe: Titan-2-ethylhexyloxid, Titan-ethoxid, Titan-isobutoxid, Titan-isopropoxid Titanmethoxid, Titan n-butoxid, Titan n-propoxid, Titan tertbutoxid, ganz besonders bevorzugt Titan n-butoxid und/oder Titan isopropoxid.

Bevorzugt im neuen Verfahren einsetzbare Edelmetalle für die Suspension sind ein oder mehrere Elemente aus der Reihe: Ru, Rh, Pd, Os, Ir und Pt. Bevorzugt im neuen Verfahren einsetzbare Edelmetalloxide für die Suspension sind Oxide eines oder mehrerer Elemente aus der Reihe: Ru, Rh, Pd, Os, Ir und Pt.

Als Ventilmetall-Verbindung dient z.B. im Falle von Titan als Elektroden-Träger bevorzugt ein Titanalkoxid. Bevorzugt eingesetzt werden hierbei Titan(IV)isopropoxid, Titan(IV) n-propoxid und Titan(IV)-n-butoxid. Der Beschichtungs-Lösung bzw. Suspension kann ferner feinteiliges Nicht-Edelmetall-Oxid-Pulver zugesetzt werden, welches auch dotiert sein kann. Es können weiterhin Nicht-Edelmetall- und/oder Dotierelement-Vorläuferverbindungen, die nach erfolgter Trocknung und/oder Sinterung ein Nicht-Edelmetall-Oxid, welches auch dotiert sein kann, bilden, im Schritt a) zugesetzt werden, wobei der Anteil an Dotierungselementen bevorzugt bis zu 20 mol-% bezogen auf den Gesamtgehalt an Metallen der Beschichtungslösung oder -dispersion beträgt.

Geeignete Nicht-Edelmetall-Vorläuferverbindungen sind, insbesondere im Lösungsmittel lösliche, Fluoride, Chloride, Iodide, Bromide, Nitrate, Phosphate, Acetate, Acetylacetonate und/oder Alkoxide von den Elementen Antimon, Blei, Eisen, Germanium, Indium, Mangan, Molybdän, Niob, Tantal, Titan, Tellur, Vanadium, Zink, Zinn, und/oder Zirkon.

Bevorzugte Nicht-Edelmetallverbindungen sind allein oder in Mischung:

Titanverbindungen ausgewählt aus der Reihe: Titanfluorid, Titanchlorid, Titaniodid, Titanbromid, Titan-2-ethylhexyloxid, Titan ethoxid, Titan isobutoxid, Titan isopropoxid, Titan methoxid, Titan n-butoxid, Titan n-propoxid, Titan tert-butoxid,

und/oder Manganverbindungen ausgewählt aus der Reihe: Manganfluorid, Manganchlorid, Manganiodid, Manganbromid, Mangannitrat, Manganphosphat, Manganacetat, Manganacetylacetonat, Manganmethoxid, Manganethoxid, Manganpropoxid, Manganbutoxid,

und/oder Indiumverbindungen ausgewählt aus der Reihe: Indiumfluorid, Indiumchlorid, Indiumiodid, Indiumbromid, Indiumnitrat, Indiumphosphat, Indiumacetat, Indiumacetylacetonat, Indiumethoxid, Indiumpropoxid, Indiumbutoxid,

und/oder Zinnverbindungen ausgewählt aus der Reihe: Zinnfluorid, Zinnchlorid, Zinniodid, Zinnbromid, Zinnacetat, Zinnacetylacetonat, Zinnmethoxid, Zinnethoxid, Zinnpropoxid, Zinnbutoxid,

und/oder Zinkverbindungen ausgewählt aus der Reihe: Zinkfluorid, Zinkchlorid, Zinkiodid, Zinkbromid, Zinknitrat, Zinkphosphat, Zinkacetat, Zinkacetylacetonat.

Besonders bevorzugte Nicht-Edelmetall-Vorläuferverbindungen sind Zinnchlorid und/oder Indiumchlorid und/oder Manganchlorid.

Die vorgenannten Verbindungen können auch als Vorläuferverbindung für eine Dotierung zusammen mit anderen Verbindungen in der Dispersion/Lösung dienen.

Geeignete Dotierelement-Vorläuferverbindungen sind, insbesondere im Lösungsmittel lösliche, Fluorverbindungen und/oder Fluoride, Chloride, Iodide, Bromide, Nitrate, Phosphate, Sulfate, Acetate, Acetylacetonate und/oder Alkoxide von den Elementen Aluminium, Antimon, Tantal, Niob, Zinn, Indium, Mangan. Bevorzugte Dotierelement-Vorläuferverbindungen sind eine oder mehrere Verbindungen aus der Reihe:

Manganverbindungen ausgewählt aus der Reihe Manganfluorid, Manganchlorid, Manganiodid, Manganbromid, Mangannitrat, Manganphosphat, Manganacetat, Manganacetylacetonat, Manganmethoxid, Manganethoxid, Manganpropoxid, Manganbutoxid,

und/oder Aluminiumverbindungen ausgewählt aus der Reihe: Aluminiumfluorid, Aluminiumchlorid, Aluminiumiodid, Aluminiumbromid, Aluminiumnitrat, Aluminiumphosphat, Aluminiumsulfat, Aluminiumacetat, Aluminiumacetylacetonat, Aluminiumethoxid, Aluminiumpropoxid, Aluminiumbutoxid

und/oder Antimonverbindungen ausgewählt aus der Reihe: Antimonfluorid, Antimonchlorid, Antimoniodid, Antimonbromid, Antimonsulfat, Antimonacetat, Antimonacetylacetonat, Antimonmethoxid, Antimonethoxid, Antimonpropoxid, Antimonbutoxid

und/oder Tantalverbindungen ausgewählt aus der Reihe: Tantalfluorid, Tantalchlorid, Tantaliodid, Tantalbromid, Tantalmethoxid, Tantalethoxide

und/oder Niobverbindungen ausgewählt aus der Reihe: Niobfluorid, Niobchlorid, Niobiodid, Niobethoxid, Niobpropoxid, Niobbutoxid

und/oder Indiumverbindungen ausgewählt aus der Reihe: Indiumfluorid, Indiumchlorid, Indiumiodid, Indiumbromid, Indiumnitrat, Indiumphosphat, Indiumsulfat, Indiumacetat, Indiumacetylacetonat, Indiumethoxid, Indiumpropoxid, Indiumbutoxid

und/oder Zinnverbindungen ausgewählt aus der Reihe: Zinnfluorid, Zinnchlorid, Zinniodid, Zinnbromid, Zinnsulfat, Zinnacetat, Zinnacetylacetonat, Zinnmethoxid, Zinnethoxid, Zinnpropoxid, Zinnbutoxid.

Besonders bevorzugt als Dotierelement-Vorläuferverbindungen geeignet sind Antimonchlorid und/oder Zinnchlorid und/oder Manganchlorid.

Aus dem Stand der Technik ist grundsätzlich bekannt, dass der zusätzliche Einsatz von Fluorverbindungen als Dotierungszusatz zur Erhöhung der elektrischen Leitfähigkeit von Oxid-Partikeln führen kann. Eine entsprechende Dotierung ist hier insbesondere möglich, wenn zusätzlich Fluorverbindungen ausgewählt aus der Reihe: Fluoressigsäure, Difluoressigsäure, Trifluoressigsäure, Fluorwasserstoff, Ammoniumfluorid, Tetramethylammoniumfluorid der Lösung/Dispersion in Schritt a) hinzugefügt werden. Bevorzugt ist auch eine Ausführung des neuen Verfahrens, dadurch gekennzeichnet, dass die Beschichtungslösung oder -dispersion gemäß Schritt a) zusätzlich eine Vorläuferverbindung ausgewählt aus der Reihe der Verbindungen von: Indium, Zinn, Antimon, Niob, Tantal, Fluor und Mangan, bevorzugt Zinn, Indium und Antimon als Vorläufer für eine Dotierung enthält, wobei der Anteil an Dotierungselementen bevorzugt bis zu 20 mol-% bezogen auf den Gesamtgehalt an Metallen der Beschichtungslösung oder -dispersion beträgt. Ganz besonders bevorzugt sind die Kombination von Zinnverbindung als Vorläuferverbindung mit einer Antimonverbindung als Dotierungsmittelvorläufer oder eine Kombination von Indiumverbindung als Vorläuferverbindung mit einer Zinnverbindung als Dotierungsmittelvorläufer. Hiermit werden Indium-Zinnoxide (ITO) oder Zinn-Antimonoxide (ATO) im Endprodukt zugänglich, die eine höhere elektrische Leitfähigkeit aufweisen als jeweils undotiertes Indiumoxid oder Zinnoxid

Bevorzugt ist weiter ein Verfahren, bei dem die Beschichtungslösung oder -dispersion gemäß Schritt a) zusätzlich eine Vorläuferverbindung ausgewählt aus der Reihe: Zinn(IV) chlorid ($SnCl_4$), Antimon (III) chlorid ($SbCl_3$), Indium (III) chlorid ($InCl_3$), und Mangan (II) chlorid ($MnCl_2$) enthält.

Durch Variation der Zusammensetzung der Beschichtungslösung oder- dispersion kann ihre Viskosität auf den jeweiligen Auftragungs-Prozess abgestimmt werden. Es können z.B. grundsätzlich bekannte Verdicker, Stabilisatoren, Benetzungsadditive usw. eingesetzt werden. Bevorzugte Beispiele hierfür sind nichtionische, wasserlösliche Polyethylenoxid-Polymere und/oder wasserlösliche Methylcellulose- und/oder Hydroxypropyl-Methylcellulose-Polymere, Stabilisatoren wie Polyvinylalkohol und/oder Polyacrylsäure und/oder Polyvinylpyrrolidon, und Benetzungsadditive, z.B. anionische Tenside wie Natriumdodecylsulfat oder kationische Tenside wie Dodecyltrimethylammonium-chlorid oder nichtionische Tenside wie Polyethylenglycolmonolaurat.

Die hergestellte Beschichtungslösung oder -dispersion wird bevorzugt in mehreren Zyklen auf die Oberfläche des Trägers aufgebracht. Dies kann durch Pinseln, Sprühen, Fluten oder Tauchen des Trägers auf bzw. in die Beschichtungslösung oder -dispersion erfolgen. Ebenso sind andere Aufbringverfahren, z. B. Druckverfahren denkbar.

Die Menge an Edelmetall bzw. Edelmetall-haltiger Beschichtung, die auf die Elektrodenfläche aufgebracht wird, kann durch die Konzentration der Auftragslösung oder durch die Anzahl der Wiederholungszyklen eingestellt werden. Elektroden für die Chlorherstellung und andere gasentwickelnde Reaktionen bestehen meist aus Streckmetallen oder anderen offenen Strukturen. Die Angabe zur Edelmetall-Beladung pro Elektrodenfläche bezieht sich im Folgenden auf die geometrische Fläche der auf eine Ebene zur Normalen projizierten Elektrodenoberfläche. Die Menge an Edelmetall bzw. Edelmetall-haltiger Beschichtung bezieht sich dann auf eine Oberfläche, die aus den äußeren Abmessungen der Elektrodenfläche errechnet werden kann.

Nach einem Aufbringzyklus werden die flüssigen Komponenten der Beschichtungslösung oder-dispersion durch Trocknung entfernt. Danach besteht die Möglichkeit einen neuen Auftragsschritt b) zu beginnen oder die Elektrode nach der Trocknung c) einer Sinterung d) bei einer Temperatur von mindestens 300°C auszusetzen. Hiernach kann erneut die Beschichtungslösung oder - dispersion aufgebracht, getrocknet und gesintert werden.

Die Trocknung c) der Beschichtung kann bei Normaldruck als auch bei vermindertem Druck, an Luft oder ggf. bevorzugt unter einer Mischung von Sauerstoff mit einem Schutzgas, insbesondere mindestens einem Gas der Reihe Stickstoff oder Edelgas, insbesondere Helium, Neon, Argon oder Krypton erfolgen. Dies gilt ebenso für die Sinterung d) der Beschichtung.

Es ist ebenfalls denkbar, die Rezeptur der Beschichtungslösung oder -dispersion bei den verschiedenen Auftrags- und Trocknungszyklen zu verändern und dadurch Gradienten im Beschichtungsaufbau zu erzeugen. So kann bevorzugt zuerst mit geringem Edelmetall-Gehalt der Träger beschichtet werden und in weiteren Beschichtungszyklen der Edelmetallgehalt auf dem Träger erhöht werden. Als Träger für den Katalysator können insbesondere Flächengebilde mit komplexer Geometrie z. B. Streckmetalle, Lochbleche, Schäume, Gewirke, Netze, Vliese verwendet und beschichtet werden.

Bevorzugt ist zudem ein Verfahren, das dadurch gekennzeichnet ist, dass der Träger auf einem Ventilmetall aus der Reihe Titan, Zirkon, Wolfram, Tantal oder Niob , bevorzugt Titan oder dessen Legierungen oder Tantal, besonders bevorzugt auf Titan oder Titanlegierungen basiert. Geeignete Titanlegierungen, die bevorzugt korrosionsstabiler sind als reines Titan, enthalten beispielsweise Palladium, oder Nickel und Palladium und Ruthenium und Chrom, oder Nickel und Molybdän, oder Aluminium und Niobium. Im Fall einer Titanlegierung sind Titan-Palladium (0,2 Gew.-% Pd) und oder Titanium-Nickel-Chrom-Ruthenium-Palladium (0,35 bis 0,55 Gew.-% Ni, 0,1 bis 0,2 Gew.-% Cr, 0,02 bis 0,04 Gew.-% Ru und 0,01 bis 0,02 Gew.-% Pd) bevorzugt.

In einer besonders vorteilhaften Variante des neuen Verfahrens wird die Oberfläche des Trägers vor dem Aufbringen b) der Beschichtungslösung oder -dispersion auf den Träger mechanisch vorgereinigt, insbesondere gesandstrahlt und gegebenenfalls anschließend zur weiteren Entfernung von Oxiden auf der Oberfläche mit einer Säure wie Salzsäure oder Oxalsäure geätzt.

Ein besonders bevorzugtes Verfahren ist dadurch gekennzeichnet, dass der Träger auf metallischem Titan oder Tantal, bevorzugt auf Titan basiert.

Zur Herstellung einer Katalysatorbeschichtung mit binären Mischoxiden aus Titanoxid und Rutheniumoxid werden in einem besonders bevorzugten Verfahren Titan(IV)n-butoxid (Ti[OCH$_2$CH$_2$CH$_2$CH$_3$]$_4$), Ruthenium(III)chlorid (RuCl$_3$), Essigsäure (CH$_3$CO$_2$H), und Wasser als Edukte verwendet.

Eine andere bevorzugte Variante des neuen Verfahrens ist dadurch gekennzeichnet, dass die Sinterung d) des beschichteten Trägers bei einer Temperatur von 300 °C bis 700 °C, bevorzugt von 400 °C bis 600 °C und besonders bevorzugt von 450 °C bis 550 °C durchgeführt wird.

Durch die alternative Zugabe von weiteren Metallsalzen als Dotierungsmittel, z. B. Iridium(III)chlorid (IrCl$_3$), Zinn(IV)chlorid (SnCl$_4$), Antimon(III)chlorid (SbCl$_3$) und Mangan(II)chlorid (MnCl$_2$) zur Beschichtungslösung des neuen Verfahrens können bevorzugt auch multinäre Mischoxide erhalten werden.

Gegenstand der Erfindung ist auch eine neue Elektrode mit einer neuen Katalysatorbeschichtung, die aus dem neuen Verfahren wie oben beschrieben erhalten wird.

Weiterer Gegenstand der Erfindung ist die Verwendung der neuen Elektrode zur elektrochemischen Herstellung von Chlor aus Alkalichloridlösungen oder Chlorwasserstoff oder Salzsäure, insbesondere aus Kochsalzlösungen.

Die neuen Elektroden, die aus dem neuen Verfahren erhalten werden, können neben den beschriebenen Anwendungen bei der Chlorherstellung alternativ auch zur Erzeugung elektrischen Stroms in z.B. Brennstoffzellen und Batterien, in Redox-Kondensatoren, bei der Elektrolyse von Wasser, der Regenerierung von Chrombädern, bei Einsatz von fluorid-haltigen Elektrolyten bei der Wasserstoffperoxid-, Ozon- der Peroxodisulfat-Herstellung eingesetzt werden. Diese Verwendungen sind weiterer Gegenstand der Erfindung.

Die Erfindung wird nachfolgend anhand der Beispiele, welche jedoch keine Beschränkung der Erfindung darstellen, näher erläutert.

**Beispiele**

**Beispiel 1: (Vergleichsbeispiel mit handelsüblichen Anoden für die NaCl-Elektrolyse und Elektrolysetest)**

Es wurde eine Titan-Standard-Streckmetall-Anode der Fa. De Nora für die NaCl-Elektrolyse, die mit einer Ruthenium- und Iridiumoxidhaltigen Katalysatorbeschichtung ausgerüstet war, eingesetzt. Dabei betrug die Größe der Anode in der eingesetzten Laborzelle 10cm x10 cm, das Anodenträgermaterial bestand aus Titan und hatte die Form eines Streckmetalls, charakterisiert durch die Maschenweite 8 mm, Stegbreite 2 mm und Stegdicke 2 mm. Zwischen Anoden- und Kathodenraum wurde eine Ionenaustauschermembran der Fa. Dupont, Typ Nafion 982, eingesetzt. Als Kathode diente eine Standard-Kathode aus Nickel der Fa. Denora für die NaCl-Elektrolyse, die mit einer Ruthenium-haltigen Beschichtung ausgerüstet war. Der Elektrodenabstand betrug 3 mm. In den Anodenraum der Elektrolysezelle wurde eine NaCl-haltige Lösung mit einer Natriumchlorid-Konz. von 210 g/l, einem Volumenstrom zwischen 5 und 10 1/h und einer Temperatur von 88 °C eingeleitet. Auf der Kathodenseite der Zelle wurde eine Natronlauge mit einer NaOH-Konz. von 31,5 Gew.-%, einem Volumenstrom zwischen 5 und 10 1/h und einer Temperatur von 88 °C eingeleitet. Die Stromdichte betrug 4 kA/m$^2$, berechnet auf die Membranfläche von 10*10 cm. Die Chlor-Konzentration des aus der Anoden-Kammer entweichenden Gases betrug 97 Vol.-%. Die Elektrolysespannung betrug 3,05 V.

**Beispiel 2: (Vergleichsbeispiel)**

Eine Beschichtungslösung, bestehend aus 2,00 g Ruthenium(III)chlorid-Hydrat (Ru-Gehalt 40,5 Gew.-%), 9,95 g n-Butanol, 0,94 g konz. Salzsäure (37 Gew.-%), 5,93 g Titansäure tetra n-butylester (Ti-(O-Bu)$_4$) wird angemischt. Diese wird auf ein gesandstrahltes Titan-Streckmetall mit der gleichen Geometrie wie in Beispiel 1 als Träger mittels Pinsel aufgetragen. In der Beschichtungslösung beträgt die Konzentration an mineralischer Säure 27,3 mol-% und die Konzentration Säure somit insgesamt 27,3 mol-%. Das Verhältnis der Summe der Säure-Stoffmengen zur Summe der Metall-Stoffmengen der Beschichtungslösung beträgt 0,375.

Anschließend wird das Streckmetall für 10 min bei 80 °C getrocknet und anschließend bei 10 min bei 470 °C gesintert. Der Auftragsprozess wird noch dreimal wiederholt, ebenso die Trocknung und Sinterung. Die letzte Sinterung erfolgt bei 520 °C für 60 min. Die Ruthenium-Flächenbeladung wurde aus dem Verbrauch der Beschichtungslösung zu 20,8 g/m$^2$ bestimmt, bei einer Zusammensetzung von 31,5 mol-% $RuO_2$ und 68,5 mol-% $TiO_2$. Diese so behandelte Anode wurde in einer Zelle wie im Beispiel 1 bei der Natriumchlorid-Elektrolyse mit einer handelsüblichen Standard-Kathode eingesetzt. Die Chlor-Konzentration des aus der Anoden-Kammer entweichenden Gases betrug 97,6 Vol.-%. Die Elektrolysespannung betrug 3,06 V.

**Beispiel 3: (Herstellung erfindungsgemäße Beschichtung)**

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

Herstellung der Beschichtungslösung: Zu einer Vorlage von 3,18 g Essigsäure wird 4,00 g Titan(IV) isopropoxid unter Kühlung im Eisbad und kräftigem Rühren zugetropft, wobei zwischen zwei Tropfen mindestens 1 min Rührzeit liegen. Die entstandene klare Lösung wird anschließend unter Kühlung 12 h weiter gerührt. Hierzu wird eine Lösung von 1,50 g Ruthenium(III)chlorid-Hydrat (Ru-Gehalt 40,35 Gew.-%), in 29,74 g 10%iger Salzsäure unter Kühlung im Eisbad und kräftigem Rühren zugetropft. Das Produkt wird danach 96 h weiter gerührt. In der wie oben beschrieben hergestellten Beschichtungslösung beträgt die Konzentration an organischer Säure 34,3 mol-%, die Konzentration an mineralischer Säure 52,8 mol-% und die Konzentration Säure insgesamt 87,0 mol-%. Die Summe der Konzentration der Metalle beträgt 13 mol-%. Das Verhältnis der Summe der Säure-Stoffmengen zur Summe der Metall-Stoffmengen der Beschichtungslösung beträgt 6,71.

Die Beschichtungslösung wurde vier Mal auf Titanplättchen aufgetropft bzw. auf Titan-Streckmetall gepinselt. Die Ruthenium--Flächenbeladung wurde aus der Gewichtszunahme des Plättchens zu 13,01 g/m$^2$ bestimmt, bei einer Zusammensetzung von 29,85 mol-% $RuO_2$ und 70,15 mol-% $TiO_2$.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

**Beispiel 4: (Herstellung erfindungsgemäße Beschichtung)**

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt

Herstellung der Beschichtungslösung: Zu einer Vorlage von 12,85 g Essigsäure wird 4,78 g Titansäure tetra n-butylester unter Kühlung im Eisbad und kräftigem Rühren zugetropft, wobei zwischen zwei Tropfen mindestens 1 min Rührzeit liegen. Die entstandene klare Lösung wird anschließend unter Kühlung 12 h weiter gerührt. Hierzu wird eine Lösung von 1,68 g Ruthenium(III)chlorid-Hydrat (Ru-Gehalt 40,35 Gew.-%), 0,544 g Zinn(IV)chlorid-Pentahydrat und 0,020 g Antimon(III)chlorid in 26,0 g 0,6%iger Salzsäure unter Kühlung im Eisbad und kräftigem Rühren zugetropft. Das Produkt wird danach 96 h weiter gerührt. In der wie oben beschrieben hergestellten Beschichtungslösung beträgt die Konzentration an organischer Säure 88,9 mol-%, die Konzentration an mineralischer Säure 1,8 mol-% und die Konzentration Säure insgesamt 90,7 mol-%. Das Verhältnis der Summe der Säure-Stoffmengen zur Summe der Metall-Stoffmengen der Beschichtungslösung beträgt 9,75.

Die Beschichtungslösung wurde vier Mal auf Titanplättchen aufgetropft bzw. auf Titan-Streckmetall gepinselt. Die Ruthenium--Flächenbeladung wurde aus der Gewichtszunahme des Plättchen zu 15,47 g/m$^2$ bestimmt, bei einer Zusammensetzung von 30,01 mol-% $RuO_2$, 62,85 mol-% $TiO_2$, 6,94 mol-% $SnO_2$ und 0,20 mol-% $Sb_2O_5$.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

**Beispiel 5: (Herstellung erfindungsgemäße Beschichtung)**

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt. Titanstreckmetall wurde zur Reinigung und zur Aufrauung der Oberfläche sandgestrahlt und anschließend mit Isopropanol gereinigt.

Herstellung der Beschichtungslösung: Zu einer Vorlage von 14,35 g Essigsäure wird 4,78 g Titansäure tetra n-butylester unter Kühlung im Eisbad und kräftigem Rühren zugetropft, wobei zwischen zwei Tropfen mindestens 1 min Rührzeit liegen. Die entstandene klare Lösung wird anschließend unter Kühlung 12 h weiter gerührt. Hierzu wird eine Lösung von 1,50 g Ruthenium(III)chlorid-Hydrat (Ru-Gehalt 40,35 Gew.-%), in 17,84 g demineralisiertes Wasser unter Kühlung im Eisbad und kräftigem Rühren zugetropft. Das Produkt wird danach 96 h weiter gerührt. In der wie oben beschrieben hergestellten Beschichtungslösung beträgt die Konzentration an Säure 92,3 mol-%. Das Verhältnis der Summe der Säure-Stoffmengen zur Summe der Metall-Stoffmengen der Beschichtungslösung beträgt 11,93.

Die Beschichtungslösung wurde vier Mal auf Titanplättchen aufgetropft bzw. parallel auf Titan-Streckmetall gepinselt. Die Ruthenium-Flächenbeladung wurde aus der Gewichtszunahme des Plättchen zu 15,47 g/m² bestimmt, bei einer Zusammensetzung von 29,9 mol-% $RuO_2$, 70,1 mol-% $TiO_2$.

Nach jedem Auftrag der Lösung wurde jeweils 10 min getrocknet bei 80 °C und anschließend 10 min bei 470 ° C gesintert (an Luft). Nach Aufbringen der letzten Schicht wurde noch eine Stunde bei 520 °C gesintert.

**Beispiel 6: (Herstellung erfindungsgemäße Beschichtung)**

(Kombination Herstellung aus feinteiligem Partikel-Zusatz und Säureüberschuss):

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

Herstellung der Beschichtungslösung:

Lösung 1: Zu einer Vorlage von 4,77 g Essigsäure wurde 1,59 g Titansäure tetra n-butylester unter Kühlung im Eisbad und kräftigem Rühren zugetropft, wobei zwischen zwei Tropfen mindestens 1 min Rührzeit lagen. Die entstandene klare Lösung wurde anschließend unter Kühlung 12 h weiter gerührt.

Lösung 2: 0,96 g crenox TR-HP-2 von crenox GmbH (BET Oberfläche 5-7 m²/g; Dichte 4,2 g/cm³; Ti02-Rutil 99,5 % Reinheit, Dichte 4,2 g/cm³, mittlere Partikelgröße 206 nm (bestimmt aus elektronenmikroskopischer Aufnahme als Durchschnitt aus 38 Partikeln) wurde in einer Lösung von 0,52 g Ruthenium(III)chlorid-Hydrat (Ru-Gehalt 40,35 Gew.-%), 216 mg Zinn(IV)chlorid-Pentahydrat und 9 mg Antimon(III)chlorid in 26,11 g demineralisiertes Wasser mittels Ultraschall 1 h dispergiert.

Lösung 2 wurde zu Lösung 1 getropft, wobei Lösung 1 im Eisbad gekühlt und kräftigt gerührt wurde. Das Produkt wurde danach 96 h weiter gerührt.

In der so hergestellten Beschichtungsdispersion beträgt die Konzentration an organischer Säure 80,2 mol-%, und die Summe der Konzentration der Metallverbindungen beträgt 19,8 mol-%. Das Verhältnis der Summe der Säure-Stoffmenge zur Summe der Metall-Stoffmengen der Beschichtungslösung beträgt 4,05.

Die Beschichtungslösung wurde vier Mal auf Titanplättchen getropft. Die Ruthenium-Flächenbeladung wurde aus der Gewichtszunahme des Plättchens zu 4,85 g/m² bestimmt, bei einer Zusammensetzung von 86,0 mol-% $TiO_2$, 10,7 mol-% $RuO_2$, 3,2 mol-% $SnO_2$ und 0,1 mol-% $Sb_2O_5$.

Nach jedem Auftrag der Lösung wurde jeweils 10 min bei 80 °C getrocknet und anschließend 10 min bei 470 °C gesintert (an Luft). Nach Aufbringen der letzten Schicht wurde noch eine Stunde bei 520 °C gesintert.

**Beispiel 7: (Herstellung erfindungsgemäße Beschichtung)**

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

Herstellung der Beschichtungslösung: Zu einer Vorlage von 3,20 g Essigsäure wird 4,00 g Titan(IV) isopropoxid unter Kühlung im Eisbad und kräftigem Rühren zugetropft, wobei zwischen zwei Tropfen mindestens 1 min Rührzeit liegen. Die entstandene klare Lösung wird anschließend unter Kühlung 12 h weiter gerührt. Hierzu wird eine Lösung von 1,50 g Ruthenium(III)chlorid-Hydrat (Ru-Gehalt 40,35 Gew.-%), in 29,78 g 1%iger Salzsäure unter Kühlung im Eisbad und kräftigem Rühren zugetropft. Das Produkt wird danach 96 h weiter gerührt. In der wie oben beschrieben hergestellten Beschichtungslösung beträgt die Konzentration an organischer Säure 65,4 mol-%, die Konzentration an mineralischer Säure 10,0 mol-% und die Konzentration Säure insgesamt 75,4 mol-%. Die Summe der Konzentration der Metalle beträgt 24,6 mol-%. Das Verhältnis der Summe der Säure-Stoffmengen zur Summe der Metall-Stoffmengen der Beschichtungslösung beträgt 3,06.

Die Beschichtungslösung wurde vier Mal auf Titanplättchen aufgetropft bzw. auf Titan-Streckmetall gepinselt. Die Ruthenium--Flächenbeladung wurde aus der Gewichtszunahme des Plättchens zu 13,01 g/m² bestimmt, bei einer Zusammensetzung von 29,85 mol-% $RuO_2$ und 70,15 mol-% $TiO_2$.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

**Beispiel 8: (elektrochemischer Test an Plättchen)**

Die elektrochemische Aktivität für die Chlorentwicklung wurde für Proben aus den Beispielen 3 bis 7 im Labormaßstab auf Titanelektroden (15 mm Durchmesser, 2 mm Dicke) durch Aufnahme von Polarisationskurven gemessen.

Versuchsparameter: gemessen in 200 g/l NaCl (pH = 3) unter Durchfluss von 100 ml/min bei 80°C, galvanostatisch mit 5 min pro Stromstufe, Potential gegen Ag/AgCl gemessen und umgerechnet auf Normalwasserstoffelektrode (NHE), Potentialwerte wurden um Ohmsche Spannungsabfälle in der Zelle korrigiert (sogenannte IR-Korrektur), Gegenelektrode: platiniertes Ti-

tanstreckmetall, Stromdichte 4 kA/m$^2$.

Das Potential jeweils bestimmt bei einer Stromdichte von 4 kA/m$^2$ der Probe aus Beispiel 3 betrug 1,415 V; der Probe aus Beispiel 4: 1,370 V; der Probe aus Beispiel 5: 1,412 V; der Probe aus Beispiel 6: 1,388 V und der Probe aus Beispiel 7: 1,364 V.

**Beispiel 9:**

**Laborelektrolyse mit einer erfindungsgemäßen Beschichtung**

Die Beschichtung auf Streckmetall aus Beispiel 5 wurde in einer Zelle wie im Beispiel 1 bei der Natriumchlorid-Elektrolyse mit einer handelsüblichen Standard-Kathode eingesetzt. Die Elektrolysespannung betrug nach drei Tagen 2,96V, anschließend wurde die Stromdichte auf 6 kA/m$^2$ erhöht und die NaCl-Konzentration auf 180 g/l abgesenkt. Nach anfangs 3,26 V fiel die Elektrolysespannung noch etwas ab, auf 3,23 V nach 10 Tagen bei 6 kA/m$^2$. Die mittlere Elektrolysespannung über die nächsten 92 Tage betrug dann 3,21 V. Die Chlor-Konzentration des aus der Anoden-Kammer entweichenden Gases betrug nach 3 Tagen bei 6 kA/m$^2$ 98,0 Vol.-%, nach 102 Tagen bei 6 kA/m$^2$ 97,0%. Anschließend wurde wieder auf die Stromdichte von 4 kA/m$^2$ gestellt bei einer Solekonzentration von 210 g/l und die Elektrolysespannung betrug 2,92 V.

**Patentansprüche**

1.  Verfahren zur nasschemischen Herstellung einer Katalysatorbeschichtung auf einem elektrisch leitfähigen Träger für Elektroden zur Chloralkali- oder Salzsäureelektrolyse mit elektrokatalytisch aktiven Komponenten auf Basis wenigstens eines Edelmetalloxids und/oder Edelmetalls der Edelmetalle der Nebengruppe: VIIIa des periodischen Systems der Elemente, (insbesondere einem Edelmetall ausgewählt aus der Reihe: Ru, Rh, Pd, Os, Ir, Pt), insbesondere Rutheniumoxid und/oder Iridiumoxid und gegebenenfalls zusätzlich wenigstens ein Ventilmetalloxid, insbesondere Titanoxid, **dadurch gekennzeichnet, dass** zur Herstellung der Katalysatorbeschichtung

    a) eine Beschichtungslösung oder -dispersion mindestens enthaltend eine Vorläuferverbindung eines Edelmetalls und/oder ein Metalloxid eines Edelmetalls, insbesondere von Ruthenium und/oder Iridium und gegebenenfalls zusätzlich eine Zinn- und/oder Ventilmetallverbindung, bevorzugt eine Titanverbindung, und ein Lösungsmittel oder Dispersionsmittel hergestellt wird, wobei der Beschichtungslösung oder -dispersion eine oder mehrere Säuren zugesetzt werden, wobei das molare Verhältnis der in der Beschichtungslösung oder -dispersion befindlichen Summe der Stoffmengen an Säure (in mol) zu der Summe der Stoffmengen der in der Beschichtungslösung oder -dispersion enthaltenen Metalle aus den Metalle enthaltenden Komponenten (d.h. der Summe der in der Beschichtungslösung oder -dispersion enthaltenen Metalle in mol) mindestens 2:1, bevorzugt mindestens 3:1, besonders bevorzugt mindestens 4:1 beträgt,
    b) die Beschichtungslösung oder -dispersion auf den leitfähigen Träger aufgebracht wird,
    c) die aufgebrachte Schicht von Lösungsmittel oder Dispersionsmittel weitgehend durch Trocknen befreit wird und
    d) die erhaltene getrocknete Schicht anschließend einer thermischen Behandlung bei einer Temperatur von mindestens 300°C, bevorzugt mindestens 400°C, und gegebenenfalls in Gegenwart Sauerstoff enthaltender Gase, unter Bildung der Katalysatorbeschichtung unterzogen wird.

2.  Verfahren gemäß Anspruch 1, **dadurch gekennzeichnet, dass** die Beschichtungslösung oder -dispersion gemäß Schritt a) eine oder mehrere Säuren mit einem pK$_s$-Wert in wässriger Lösung von höchstens 12, bevorzugt höchstens 8 und besonders bevorzugt höchstens 5 enthält.

3.  Verfahren gemäß Anspruch 1 oder 2, **dadurch gekennzeichnet, dass** die Beschichtungslösung oder -dispersion gemäß Schritt a) zusätzlich eine oder mehrere Vorläuferverbindungen und/oder ein Metall und/oder ein Metalloxid eines oder mehrerer Dotierungselemente aus der Reihe: Aluminium, Antimon, Blei, Eisen, Germanium, Indium, Mangan, Molybdän, Niob, Tantal, Titan, Tellur, Vanadium, Zink, Zinn, und Zirkon, enthält.

4.  Verfahren gemäß einem der Ansprüche 1 bis 3, **dadurch gekennzeichnet, dass** die thermische Behandlung d) in Gegenwart von Luft oder in Gegenwart einer Mischung von Sauerstoff und einem Schutzgas, insbesondere mindestens einem Schutzgas der Reihe Stickstoff oder Edelgas, insbesondere Helium, Neon, Argon oder Krypton durchgeführt wird.

5.  Verfahren gemäß einem der Ansprüche 1 bis 4, **dadurch gekennzeichnet, dass** die Trocknung c) in Gegenwart von Luft oder in Gegenwart einer Mischung von Sauerstoff und einem Schutzgas, insbesondere mindestens einem Schutzgas der Reihe Stickstoff oder Edelgas, insbesondere Helium, Neon, Argon oder Krypton durchgeführt wird.

6.  Verfahren gemäß einem der Ansprüche 1 bis 5, **da-**

**durch gekennzeichnet, dass** als Vorläuferverbindung in Schritt a) ein Chlorid von Ruthenium und/oder Iridium und gegebenenfalls zusätzlich Titanalkoxid, insbesondere Titanbutoxid oder Titanpropoxid verwendet wird.

7. Verfahren gemäß einem der Ansprüche 1 bis 6, **dadurch gekennzeichnet, dass** als Säure in der Beschichtungslösung in a) eine organische oder anorganische Säure oder eine Kombination von organischen und anorganischen Säuren eingesetzt wird.

8. Verfahren gemäß Anspruch 7, **dadurch gekennzeichnet, dass** als Säure in der Beschichtungslösung eine Kombination von organischer und anorganischer Säure eingesetzt wird, wobei das molare Verhältnis der in der Beschichtungslösung oder - dispersion befindlichen Stoffmenge an organischer Säure (in mol) zu der Stoffmenge an mineralischer Säure 20:80 bis 100:0, bevorzugt 50:50 bis 100:0, besonders bevorzugt 80:20 bis 100:0 beträgt.

9. Verfahren gemäß Anspruch 7 oder 8, **dadurch gekennzeichnet, dass** als Säure in der Beschichtungslösung in a) Salzsäure und/oder eine $C_1$ bis $C_4$-Carbonsäure, bevorzugt mindestens eine Säure aus der Reihe: Salzsäure, Ameisensäure, Essigsäure oder Propionsäure eingesetzt wird.

10. Verfahren gemäß einem der Ansprüche 1 bis 9, **dadurch gekennzeichnet, dass** als Lösungsmittel oder Dispersionsmittel eines oder mehrere aus der Reihe: Wasser und $C_1$-$C_6$-Alkohol, bevorzugt Butanol oder Isopropanol, eingesetzt wird.

11. Verfahren gemäß einem der Ansprüche 1 bis 10, **dadurch gekennzeichnet, dass** der Träger auf einem Ventilmetall aus der Reihe Titan, Zirkon, Wolfram, Tantal oder Niob , bevorzugt Titan oder einer Titanlegierung oder Tantal, besonders bevorzugt auf Titan basiert.

12. Verfahren gemäß einem der Ansprüche 1 bis 11, **dadurch gekennzeichnet, dass** die Oberfläche des Trägers vor dem Aufbringen b) der Beschichtungslösung oder -dispersion auf den Träger mechanisch vorgereinigt, insbesondere gesandstrahlt und gegebenenfalls anschließend zur weiteren Entfernung von Oxiden auf der Oberfläche mit einer Säure wie Salzsäure oder Oxalsäure geätzt wird.

13. Verfahren gemäß Anspruch 1 bis 12, **dadurch gekennzeichnet, dass** die Beschichtungslösung oder -dispersion gemäß Schritt a) zusätzlich mindestens eine Vorläuferverbindung ausgewählt aus der Reihe der Verbindungen von: Aluminium, Antimon, Blei, Eisen, Germanium, Indium, Mangan, Molybdän, Niob, Tantal, Titan, Tellur, Vanadium, Zink, Zinn, und/oder Zirkon, bevorzugt Zinn, Indium, Mangan und Antimon gegebenenfalls auch als Vorläuferverbindung für eine Dotierung enthält, wobei der Anteil an Dotierungselementen letztlich bevorzugt bis zu 20 mol-% bezogen auf den Gesamtgehalt an Metallen der Beschichtungslösung oder -dispersion beträgt.

14. Verfahren gemäß Anspruch 13, **dadurch gekennzeichnet, dass** die Beschichtungslösung oder -dispersion gemäß Schritt a) eine oder mehrere Vorläuferverbindungen ausgewählt aus der Reihe der Verbindungen von: Aluminium, Antimon, Tantal, Niob, Zinn, Indium besonders bevorzugt der Reihe Zinn (IV) chlorid ($SnCl_4$), Indium (III) chlorid ($InCl_3$), Antimon (III) chlorid ($SbCl_3$) und Mangan (II) chlorid ($MnCl_2$) enthält.

15. Verfahren gemäß einem der Ansprüche 1 bis 14, **dadurch gekennzeichnet, dass** als zusätzliche Ventilmetall-Vorläuferverbindungen bevorzugt im Lösungsmittel lösliche Fluoride, Chloride, Iodide, Bromide, Nitrate, Phosphate, Sulfate, Acetate, Acetylacetonate oder Alkoxide von den Elementen Titan, Zirkon, Wolfram, Tantal und Niob eingesetzt werden, besonders bevorzugt wenigstens ein Titanalkoxid ausgewählt aus der Reihe: Titan-2-ethylhexyloxid, Titan-ethoxid, Titan-isobutoxid, Titan-isopropoxid Titan-methoxid, Titan n-butoxid, Titan n-propoxid, Titan tert-butoxid, ganz besonders bevorzugt Titan n-butoxid und/oder Titan isopropoxid.

16. Verfahren gemäß einem der Ansprüche 1 bis 15, **dadurch gekennzeichnet, dass** zur Herstellung einer Katalysatorbeschichtung mit binären Mischoxiden aus Titanoxid und Rutheniumoxid eine Beschichtungslösung in a) enthaltend Titan(IV)butoxid und Ruthenium(III)chlorid ($RuCl_3$) und eine Mischung aus Essigsäure und Wasser verwendet werden.

17. Elektrode aufweisend eine Katalysatorbeschichtung erhalten nach einem Verfahren gemäß einem der der Ansprüche 1 bis 16.

18. Verwendung der Elektrode gemäß Anspruch 17 zur elektrochemischen Herstellung von Chlor aus Chlorwasserstoff- oder Alkalichloridlösungen, insbesondere aus Kochsalzlösungen oder zur Erzeugung elektrischen Stroms, bevorzugt in Brennstoffzellen und Batterien, in Redox-Kondensatoren, zur Elektrolyse von Wasser, zur Regenerierung von Chrombädern, oder bei Einsatz von fluorid-haltigen Elektrolyten bei der Wasserstoffperoxid-, Ozon- der Peroxodisulfat-Herstellung.

Europäisches
Patentamt

European
Patent Office

Office européen
des brevets

# EUROPÄISCHER RECHERCHENBERICHT

**Nummer der Anmeldung**

EP 14 15 3899

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 715 002 A1 (DOW CHEMICAL CO [US]) 5. Juni 1996 (1996-06-05) | 1-15,17, 18 | INV. C25B11/04 H01M4/04 C25B1/34 |
| Y | * das ganze Dokument * ----- | 16 | |
| X | US 3 846 273 A (BIANCHI G ET AL) 5. November 1974 (1974-11-05) | 1-7, 9-15,17, 18 | |
| Y | * das ganze Dokument * ----- | 16 | |

**RECHERCHIERTE SACHGEBIETE (IPC)**

C25B

Der vorliegende Recherchenbericht wurde für alle Patentansprüche erstellt

| Recherchenort | Abschlußdatum der Recherche | Prüfer |
|---|---|---|
| München | 5. Mai 2014 | Ritter, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 15 3899

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2014

| Im Recherchenbericht angeführtes Patentdokument | Datum der Veröffentlichung | Mitglied(er) der Patentfamilie | Datum der Veröffentlichung |
|---|---|---|---|
| EP 0715002 A1 | 05-06-1996 | CA 2163610 A1 | 31-05-1996 |
| | | CN 1132269 A | 02-10-1996 |
| | | DE 69521588 D1 | 09-08-2001 |
| | | DE 69521588 T2 | 25-10-2001 |
| | | EP 0715002 A1 | 05-06-1996 |
| | | JP 3883597 B2 | 21-02-2007 |
| | | JP H08246182 A | 24-09-1996 |
| | | US 5503663 A | 02-04-1996 |
| US 3846273 A | 05-11-1974 | BE 725491 A | 13-06-1969 |
| | | BE 725492 A | 13-06-1969 |
| | | CA 962228 A1 | 04-02-1975 |
| | | DE 1814567 A1 | 14-08-1969 |
| | | DE 1814576 A1 | 26-11-1970 |
| | | FR 1595024 A | 08-06-1970 |
| | | FR 1597806 A | 29-06-1970 |
| | | GB 1231280 A | 12-05-1971 |
| | | GB 1235570 A | 16-06-1971 |
| | | NL 6817957 A | 17-06-1969 |
| | | NL 6817966 A | 17-06-1969 |
| | | US 3616445 A | 26-10-1971 |
| | | US 3810770 A | 14-05-1974 |
| | | US 3846273 A | 05-11-1974 |
| | | US 3948751 A | 06-04-1976 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200602843 A

- DE 602005002661 T2

**In der Beschreibung aufgeführte Nicht-Patentliteratur**

- **SCHMITTINGER.** Chorine. Wiley-VCH, 1999, 19-27
- **WINNACKER-KÜCHLER.** Chemische Technik, Prozesse und Produkte. Wiley-VCH, 2005, 469-470
- **WINNACKER-KÜCHLER.** Chemische Technik, Prozesse und Produkte. Wiley-VCH, 2005, 514

- **WINNACKER-KÜCHLER.** Chemische Technik, Prozesse und Produkte. Wiley-VCH, 2005, 515
- *Electrochimica Acta,* 1989, vol. 34 (6), 811-822
- **V. M. JOVANOVIC ; A. DEKANSKI ; P. DESPOTOV ; B. Z. NIKOLIC ; R. T. ATANASOSKI.** *Journal of Electroanalytical Chemistry,* 1992, vol. 339, 147-165